(19) Europäisches Patentamt
European Patent Office
Office européen des brevets

(11) **EP 3 902 095 B1**

(12) **FASCICULE DE BREVET EUROPEEN**

(45) Date de publication et mention de la délivrance du brevet:
**05.06.2024 Bulletin 2024/23**

(21) Numéro de dépôt: **21169608.3**

(22) Date de dépôt: **21.04.2021**

(51) Classification Internationale des Brevets (IPC):
**H02J 7/35** *(2006.01)* **H02J 7/00** *(2006.01)*

(52) Classification Coopérative des Brevets (CPC):
**H02J 7/0048; H02J 7/35**

(54) **PROCÉDÉ DE PRÉVISION D'UNE DURÉE DE FONCTIONNEMENT D'UN OBJET CONNECTÉ**

VERFAHREN ZUR VORHERSAGE EINER BETRIEBSZEIT EINES VERBUNDENEN OBJEKTS

PROCESS FOR PREDICTING AN OPERATING TIME OF A CONNECTED OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2020 FR 2004027**

(43) Date de publication de la demande:
**27.10.2021 Bulletin 2021/43**

(73) Titulaire: **Orange**
**92130 Issy-les-Moulineaux (FR)**

(72) Inventeur: **EXCOFFIER, David**
**92326 CHÂTILLON CEDEX (FR)**

(56) Documents cités:
**WO-A1-2014/102480    US-A1- 2011 151 943**
**US-A1- 2018 358 822    US-B1- 9 184 625**

**Description**

Technique antérieure

L'invention se rapporte au domaine général des objets connectés et plus particulièrement à celui de la gestion de la consommation d'énergie de tels objets.

Les objets connectés sont aujourd'hui de plus en plus utilisés.

Certains de ces objets bénéficient de capacité de traitement et d'une autonomie relativement réduites. Ils peuvent être utilisés pour effectuer des tâches très variées, plus ou moins critiques, et plus ou moins consommatrices en puissance de calcul ou en énergie. Certains peuvent avoir un fonctionnement plus ou moins constant, d'autres plus ou moins régulier, d'autres très irrégulier.

Par exemple, un objet connecté peut être utilisé pour effectuer des opérations cryptographiques ponctuelles et pour relayer régulièrement des mesures délivrées par un capteur.

Certains de ces objets connectés peuvent être alimentés par le réseau électrique, ou fonctionner sur batterie au moins temporairement. Certains peuvent aussi produire de l'énergie à partir d'une source d'énergie renouvelable. Pour certaines énergies renouvelables, la quantité d'énergie pouvant être produite à un instant donné peut fortement varier dans le temps, et ce de façon plus ou moins prévisible. Un exemple est US2011/151943.

Dans cet environnement très incertain, il est usuel de sur-dimensionner soit les capacités de production d'énergie de ces objets connectés (panneaux solaires, éoliennes, ...) soit leurs capacités de stockage d'énergie (batteries) pour diminuer le risque d'une défaillance de l'objet connecté en énergie.

Cette solution peut ne pas être satisfaisante pour certains objets connectés. L'invention vise une solution qui évite un tel surdimensionnement.

Exposé de l'invention

Plus précisément, et selon un premier aspect, l'invention concerne un procédé de prévision d'une durée de fonctionnement d'un objet connecté comportant une batterie, le procédé comprenant:

- une étape d'obtention d'une quantité d'énergie emmagasinée dans la batterie ;
- une étape d'obtention d'une quantité d'énergie instantanée consommée par l'objet connecté ;
- une étape d'obtention d'au moins une quantité d'énergie instantanée, dépendante d'une énergie ambiante issue d'une source d'énergie renouvelable, et pouvant être utilisée pour alimenter l'objet connecté ;
- une étape d'obtention d'une durée de vie restante de l'objet connecté en fonction de ces quantités ;

- une étape d'obtention de la durée de fonctionnement prévue de l'objet connecté en fonction de la durée de vie restante; et
- une étape de mise en oeuvre d'au moins une action prenant en compte cette durée de fonctionnement prévue.

Corrélativement l'invention concerne un objet connecté comportant :

- une batterie ;
- un module de mesure d'une quantité d'énergie emmagasinée dans la batterie ;
- un module d'obtention d'une quantité d'énergie instantanée consommée par l'objet connecté ;
- un module d'obtention d'au moins une quantité d'énergie instantanée dépendante d'une énergie ambiante issue d'une source d'énergie renouvelable et pouvant être utilisée pour alimenter l'objet connecté;
- un module d'obtention d'une durée de vie restante de l'objet connecté en fonction de ces quantités ;
- un module d'obtention d'une durée de fonctionnement prévue de l'objet connecté en fonction de ladite durée de vie restante; et
- un module de mise en oeuvre d'au moins une action prenant en compte ladite durée de fonctionnement prévue.

Ainsi, et d'une façon générale, l'invention propose un procédé permettant de prévoir une durée de fonctionnement d'un objet connecté et de mettre en oeuvre une action en fonction de cette prévision. Cette durée de fonctionnement permet de prévoir un instant de défaillance de l'objet connecté, notamment par défaut d'alimentation en énergie.

Le procédé de prévision proposé comporte une étape d'obtention d'une quantité d'énergie instantanée qui peut être utilisée directement ou indirectement pour alimenter l'objet connecté. Cette énergie peut être :

- soit, une énergie produite par un module de production d'énergie de l'objet connecté à partir de l'énergie ambiante ;
- soit, l'énergie ambiante elle-même.

Ainsi, la durée de vie de l'objet connecté est estimée en prenant en compte soit l'énergie ambiante elle-même, soit la quantité d'énergie pouvant être produite par l'objet connecté à partir de l'énergie ambiante. La durée de vie de l'objet connecté est ainsi estimée précisément même si la source d'énergie renouvelable présente de fortes variations dans le temps, par exemple, si l'objet connecté produit de l'énergie à partir de l'énergie solaire ou du vent.

Dans un mode particulier de réalisation, une action est mise en oeuvre si la durée de fonctionnement prévue est inférieure à un seuil, ou si elle ne permet pas à l'objet connecté d'effectuer une tâche programmée, ou si elle ne permet pas à l'objet connecté de terminer une tâche en cours sans adaptation de cette tâche.

Dans un mode particulier de réalisation, l'action mise en oeuvre par l'objet connecté comporte une modification d'un mode de consommation d'énergie de l'objet connecté. L'objet connecté peut par exemple être mis en veille ou éteint.

Dans un mode particulier de réalisation, l'action mise en oeuvre par l'objet connecté comporte une sauvegarde de données de l'objet connecté.

Dans un mode particulier de réalisation, l'action mise en oeuvre par l'objet connecté comporte la restitution ou l'envoi d'une alerte indiquant la durée de fonctionnement prévue de l'objet connecté.

Dans un mode particulier de réalisation, l'action mise en oeuvre par l'objet connecté comporte la reprogrammation d'une tâche programmée à un instant où il est prévu que l'objet connecté sera en défaillance, par exemple d'une tâche de calcul, par exemple cryptographique.

Dans un mode particulier de réalisation, l'action mise en oeuvre par l'objet connecté comporte l'adaptation d'au moins un paramètre d'une communication (établie ou à venir) entre l'objet connecté et au moins un autre équipement, par exemple une adaptation de débit.

Dans un mode particulier de réalisation, dans lequel deux objets connectés sont en communication, un premier objet connecté peut obtenir la durée prévue de fonctionnement de l'autre objet connecté et prendre en compte cette durée pour adapter au moins un paramètre de la communication.

Dans un mode particulier de réalisation, le procédé de prévision selon l'invention comporte une étape de mesure de la quantité d'énergie instantanée consommée.

Dans un autre mode particulier de réalisation, la quantité d'énergie instantanée consommée est obtenue à partir de mesures successives de la quantité d'énergie emmagasinée dans la batterie de l'objet connecté.

Dans un autre mode particulier de réalisation, la quantité d'énergie instantanée consommée est obtenue à partir d'une mesure de la quantité d'énergie instantanée consommée, cette mesure étant corrélée avec des mesures successives de la quantité d'énergie emmagasinée dans la batterie de l'objet connecté.

Dans un mode particulier de réalisation, la durée de vie restante de l'objet connecté est obtenue à partir d'une durée de vie restante en l'absence d'apport d'énergie, la durée de vie restante en l'absence d'apport d'énergie étant elle-même obtenue dans un abaque indexé par la quantité d'énergie emmagasinée dans une batterie et par la quantité d'énergie instantanée consommée.

L'abaque peut être créé au préalable et mémorisé dans une mémoire de l'objet connecté. Il peut aussi être créé ou mis à jour par l'objet connecté. L'utilisation d'un tel abaque est très avantageuse dans le contexte d'un objet connecté car il permet d'obtenir une estimation fiable de la durée de vie de l'objet connecté sans calcul, l'obtention de cette estimation se faisant par simple lecture dans l'abaque.

Dans un mode particulier de réalisation, la quantité d'énergie instantanée pouvant être utilisée pour alimenter l'objet connecté est l'énergie produite par l'objet connecté à partir de l'énergie ambiante. Cette énergie est mesurée en sortie d'un module de production d'énergie de l'objet connecté.

Mais le procédé proposé n'impose pas de mesurer l'énergie instantanée produite par l'objet connecté à partir de l'énergie ambiante.

Dans un mode particulier de réalisation, l'objet connecté comporte un capteur de mesure de l'énergie ambiante et la durée de vie de l'objet connecté est obtenue à partir d'une mesure de l'énergie ambiante issue d'une source d'énergie renouvelable et d'une quantité d'énergie instantanée consommée par l'objet connecté.

Dans ce mode particulier de réalisation, la durée de vie restante de l'objet connecté peut être obtenue dans un abaque indexé par la mesure de l'énergie ambiante et par la quantité d'énergie instantanée consommée.

Dans un mode particulier de réalisation, la quantité d'énergie instantanée pouvant être produite par l'objet connecté est mesurée en sortie d'un module de production d'énergie de l'objet connecté et corrélée avec une mesure de l'énergie ambiante.

Dans un mode particulier de réalisation, le procédé comporte :

- une étape d'enregistrement/de mémorisation de la durée de fonctionnement prévue de l'objet connecté à un instant courant ; et
- une étape d'estimation de la durée de fonctionnement prévue de l'objet connecté à un instant donné en fonction de l'historique.

Ce mode de réalisation permet de prédire la durée de fonctionnement de l'objet connecté sans faire de nouvelles mesures, en se basant sur le passé. Ce mode de réalisation est particulièrement avantageux lorsque l'objet connecté a un fonctionnement régulier ou périodique.

Dans un mode particulier de réalisation, la quantité d'énergie instantanée consommée est mesurée. Dans un autre mode particulier, non exclusif du mode précité, le procédé proposé comporte :

- une étape d'obtention, pour au moins une tâche susceptible d'être mise en oeuvre par l'objet connecté, d'un profil de consommation instantanée de l'objet connecté en raison de la mise en oeuvre de la tâche ;
- une étape d'estimation de la quantité d'énergie instantanée consommé à partir d'une structure de données de profils de consommation de tâches susceptibles d'être mises en oeuvre par l'objet connecté.

Un (ou plusieurs) profil de consommation instantanée d'une tâche peut être créé au préalable et indépendamment du procédé mis en oeuvre par l'objet connecté, et mémorisé dans une mémoire de l'objet connecté. Cependant, un tel profil peut aussi être créé ou mis à jour par l'objet connecté à partir des tâches mises en oeuvre à un instant donné et de la quantité d'énergie consommée à cet instant donné. Ce mode de réalisation permet d'affiner un profil de consommation ou d'en créer un pour une nouvelle tâche par exemple.

Dans un mode particulier de réalisation, le procédé de prévision proposé est mis en oeuvre par un programme d'ordinateur.

Par conséquent, l'invention vise également un programme d'ordinateur sur un support d'enregistrement, ce programme étant susceptible d'être mis en oeuvre dans un objet connecté ou plus généralement dans un ordinateur. Ce programme comporte des instructions adaptées à la mise en oeuvre d'un procédé de prévision tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution de l'un des procédés conformes à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 illustre de façon schématique un objet connecté dans un mode de réalisation particulier ;

- la figure 2 représente sous forme d'un organigramme les principales étapes d'un procédé de prévision conforme à un mode particulier de réalisation ;

- la figure 3 représente un exemple d'une structure de données de profils de consommation de tâches pouvant être utilisée dans un mode particulier de réalisation ;

- la figure 4 représente un exemple d'une structure de données associant des quantités d'énergie ambiante et des quantités d'énergie produite, pouvant être utilisée dans un mode particulier de réalisation ;

- la figure 5 représente un exemple d'abaque permettant d'estimer la durée de vie d'un objet connecté sans et avec apport d'énergie, dans un mode particulier de réalisation ;

- la figure 6 représente un exemple d'une structure de données mémorisant un historique de prévisions de durées de fonctionnement d'un objet connecté, dans un mode particulier de réalisation ; et

- la figure 7 représente l'architecture fonctionnelle d'un objet connecté dans un mode particulier de réalisation.

Description détaillée de plusieurs modes de réalisation

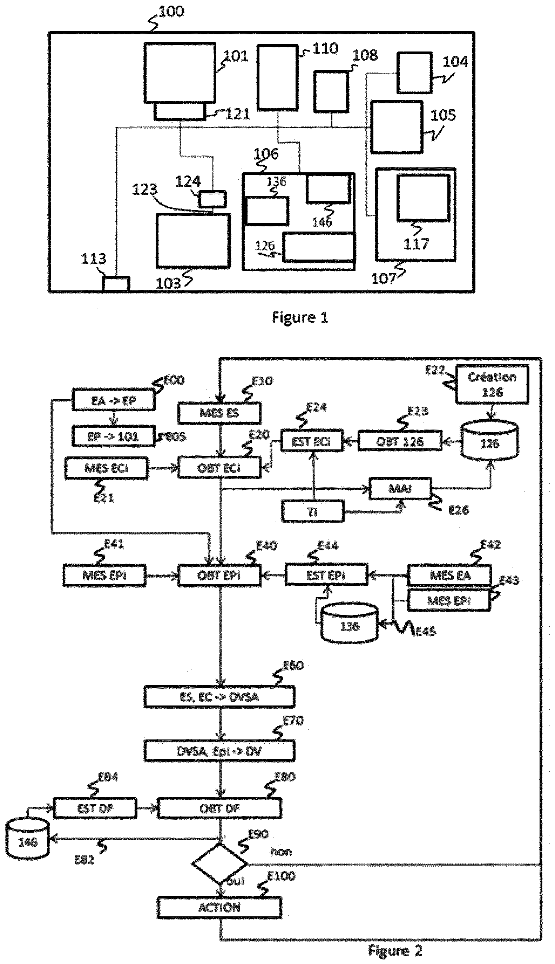

La figure 1 représente un objet connecté 100 dans un mode particulier de réalisation.

Dans ce mode de réalisation, l'objet connecté 100 comporte une batterie 101 alimentée par des panneaux photovoltaïques 103, une mémoire non volatile réinscriptible 106, un processeur 104, un système d'exploitation 105, une mémoire morte 107, une mémoire volatile 108 et un module de communication 110.

Dans le mode de réalisation décrit ici la batterie 101 comporte une borne ou connecteur 121 auprès de laquelle peuvent être obtenues une charge électrique $I_B$ de la batterie 101 et une tension électrique moyenne $U_B$ sous laquelle cette charge est fournie.

Dans le mode de réalisation décrit ici, l'objet connecté comporte un capteur 113 pour mesurer une quantité d'énergie ambiante EA (ici exprimée en Lux).

Dans le mode de réalisation décrit ici, les panneaux photovoltaïques 103 comportent une unité 124 configurée pour obtenir auprès d'une borne 123 une charge électrique $I_P$ et une tension moyenne $U_P$ permettant de déterminer la quantité d'énergie instantanée EPi produite par les panneaux photovoltaïques 103 à partir de l'énergie ambiante.

Le capteur 113 et l'unité 124 constituent deux exemples de modules conformes à l'invention pour obtenir une quantité d'énergie instantanée (à savoir l'énergie ambiante EA ou l'énergie EPi produite à partir de cette énergie ambiante) pouvant être utilisée directement ou indirectement pour alimenter l'objet connecté 100.

Dans le cas où l'énergie ambiante est l'énergie solaire, le capteur 113 peut être une photorésistance ou un capteur de luminosité. Ce capteur peut éventuellement être intégré dans le panneau photovoltaïque.

Dans le mode de réalisation décrit ici, la mémoire 106 comporte trois structures de données accessibles par le processeur 104 en lecture et en écriture, à savoir :

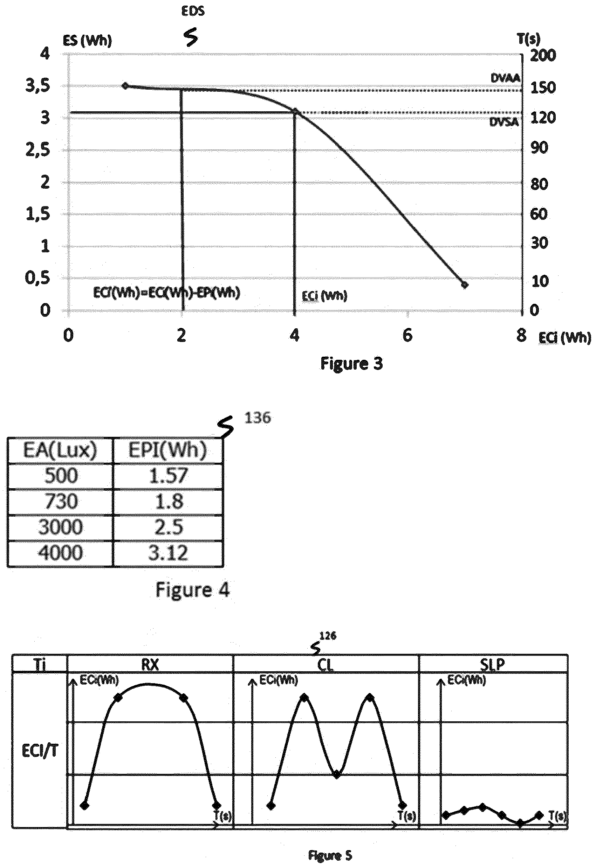

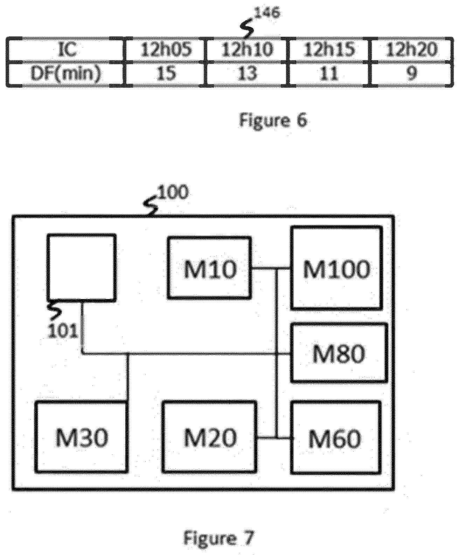

- une structure de données 126 représentée à la figure 3 contenant des profils de consommation d'un certain nombre de tâches Ti qui peuvent être mises en oeuvre par l'objet connecté 100 ;
- une structure de données 136 représentée à la figure 4 contenant pour plusieurs conditions d'énergie ambiante EA, des quantités d'énergie instantanée EPi pouvant être produite par les cellules photovoltaïques 103 dans ces conditions;
- une structure de données 146 représentée à la figure 6 contenant un historique des prévisions d'une durée de fonctionnement DF de l'objet connecté 100 à différents instants.

La mémoire 107 mémorise un programme d'ordinateur 117 lisible par le processeur 104 et configuré pour mettre en oeuvre un procédé de prévision de la durée de fonctionnement DF dont les principales étapes sont représentées figure 2.

Dans le mode de réalisation décrit ici, l'énergie ambiante EA est l'énergie solaire.

En variante, la batterie 101 peut être alimentée par une source d'énergie renouvelable autre que l'énergie solaire, par exemple une énergie produite par une technique utilisant le vent ou l'eau, ou tout autre type d'énergie renouvelable (par exemple une technique utilisant la différence de température, les ondes radio...).

Le module d'obtention d'une quantité d'énergie instantanée dépendante de l'énergie ambiante et utilisable pour alimenter l'objet connecté (par exemple l'unité 124 et la borne 113) dépend du type d'énergie renouvelable. Lorsque plusieurs énergies renouvelables sont utilisées, plusieurs modules peuvent être utilisés, chacun adapté à un type d'énergie renouvelable.

La batterie 101 peut aussi être alimentée par un réseau électrique.

Dans le mode de rédaction décrit ici la batterie 101 est de type super-condensateur mais tout autre type ayant un fonctionnement similaire peut être utilisé.

Au moins une des structures de données 126 (profils de consommation des tâches) ou 136 (énergies produites et ambiantes) peut être créée au préalable et chargée dans la mémoire non volatile 106, voire dans la mémoire morte 107 si ces structures ne sont pas destinées à être mises à jour ultérieurement.

Dans le mode de réalisation décrit ici, les structures de données 126 ou 136 sont créées et mises à jour conformément au procédé de prévision.

En particulier, la structure de données 126 de profils de consommation de tâches illustrée à la figure 3 est créée (étape E22) et mise à jour (étape E26) par le processeur 104 à partir: (i) de la connaissance des tâches Ti exécutées à un instant donné par le processeur 104, et (ii) de la quantité d'énergie instantanée consommée par l'objet connecté 100 à cet instant. Dans le mode de réalisation décrit ici, les tâches Ti actives sont communiquées au processeur 104 par le système d'exploitation 105.

Dans l'exemple de la figure 3, la structure de données 126 comporte le profil d'une tâche Ti de réception RX, celui d'une tâche Ti de calcul CL et le profil d'énergie consommée en mode veille SLP.

Dans le mode de réalisation décrit ici, la structure de données 136, représentée à la figure 4, qui associe une quantité d'énergie instantanée EPi produite par les cellules photovoltaïques, en fonction de l'énergie ambiante EA, peut être mise à jour par le processeur 104 par exemple en fonction d'une valeur de l'énergie ambiante EA obtenue (étape E42) par le capteur 113 et d'une quantité d'énergie instantanée EPi produite au même moment par les panneaux photovoltaïques 103 et obtenue par l'unité 124 auprès de la borne 123.

Par exemple, la structure 136 représentée à la figure 4 comporte un enregistrement indiquant que les panneaux photovoltaïques 103 produisent une énergie instantanée EPi de 1.57 wattheure (Wh) pour une énergie ambiante de 500 Lux.

Dans le mode de réalisation décrit ici, la structure de données 146 qui mémorise l'historique des prévisions des durées de fonctionnement DF est mise à jour (étape E82) en enregistrant dans cette structure une durée de fonctionnement DF de l'objet connecté 100 prévue à un instant courant IC.

Par exemple, selon la structure de données représentée à la figure 6 il était prévu à 12h05 que l'objet connecté 100 aurait une durée de fonctionnement DF de 15 minutes.

La figure 2 représente sous forme d'organigramme les principales étapes d'un procédé de prévision d'une durée de fonctionnement DF de l'objet connecté 100, conformément à un mode de réalisation particulier.

Dans l'exemple décrit ici ce procédé est mis en oeuvre lorsque le processeur 104 exécute le programme d'ordinateur 117.

Dans le mode de réalisation décrit ici, ce procédé comporte une étape E10 d'obtention d'une quantité d'énergie emmagasinée ES dans la batterie 101 à partir de la tension moyenne U_B et de la charge électrique I_B lues à la borne 121.

La quantité d'énergie emmagasinée ES est égale à la charge électrique de la batterie 101 $I_B$ en ampère-heure (Ah) multipliée par la tension moyenne $U_B$ en volt (V) sous laquelle cette charge est déchargée.

La quantité d'énergie emmagasinée ES peut se mesurer en wattheure (Wh) grâce à la formule :

$$ES(Wh)=I_B \ (Ah)^*U_B \ (V)$$

Le procédé comporte une étape E20 d'obtention d'une quantité d'énergie instantanée consommée ECi par l'objet connecté 100. Cette quantité d'énergie instantanée consommée ECi peut être obtenue de plusieurs façons.

Dans une première variante, cette quantité ECi est obtenue par différence entre les mesures d'énergie emmagasinée ES de la batterie 101 entre deux instants t-1 et t suffisamment proches :

$$ECi(Wh) = ES_t(Wh) - ES_{t-1}(Wh)$$

Dans une deuxième variante, cumulative ou non à la première variante, la quantité d'énergie instantanée consommée ECi est obtenue dans la structure de données 126 à partir des tâches Ti en cours d'exécution par le processeur 104, la liste de ces tâches Ti étant communiquée au processeur 104 par le système d'exploitation 105 au cours de cette même étape.

Dans le mode de réalisation décrit ici les cellules photovoltaïques produisent une énergie EP à partir d'une énergie ambiante EA (étape générale E00), cette énergie produite étant stockée dans la batterie 101 au cours d'une étape générale (E05).

Dans le mode de réalisation décrit ici, selon le procédé, on obtient, au cours d'une étape E40, la quantité d'énergie instantanée EPi pouvant être produite par les panneaux photovoltaïques. Cette quantité EPi peut être obtenue de plusieurs façons.

Dans une première variante, le procédé selon l'invention comporte une étape E41 d'obtention de la quantité d'énergie instantanée EPi produite par les panneaux photovoltaïques 103 à partir de la tension moyenne $U_P$ et de la charge électrique $I_P$ lues à la borne 113.

La quantité d'énergie instantanée produite EPi peut se mesurer en wattheure (Wh) grâce à la formule :

$$EPi \ (Wh)=I_P(Ah)^*U_P(V)$$

Dans une deuxième variante, cumulative ou non à la première variante, la quantité d'énergie instantanée EPi produite est lue dans la structure de données 136 à partir d'une mesure E42 de la quantité d'énergie ambiante effectuée par le capteur 123.

Dans une troisième variante de réalisation, on mesure simplement l'énergie ambiante EA, et non la quantité d'énergie produite EPi produite par l'objet connecté à partir de l'énergie ambiante.

Les étapes E10 à E45 ont permis de décrire comment, dans différents modes de réalisation de l'invention, peuvent être obtenues :

- une quantité d'énergie ES emmagasinée dans la batterie 101 ; et/ou
- une quantité d'énergie instantanée ECi consommée par l'objet connecté 100 ; et/ou
- une énergie ambiante EA ; et/ou
- une quantité d'énergie instantanée EPi pouvant être produite par les cellules photovoltaïques 103 ; à à partir de l'énergie ambiante.

Selon le mode de réalisation choisi et comme décrit ci-après, une ou plusieurs de ces énergies ES, ECi, EPi, EA sont utilisées pour obtenir une durée de fonctionnement prévue DF de l'objet connecté 100.

Dans un mode particulier de réalisation, la durée de vie restante de l'objet connecté DV est obtenue dans un abaque indexé par la mesure de l'énergie ambiante et par la quantité d'énergie instantanée consommée.

Dans un autre mode de réalisation, la quantité d'énergie emmagasinée ES et la quantité d'énergie instantanée consommée ECi sont utilisées lors d'une étape E60 pour obtenir une durée DVSA de vie restante de l'objet connecté 100 sans apport en énergie.

Cette durée de vie restante sans apport en énergie DVSA de l'objet connecté 100 ne prend pas en compte la quantité d'énergie instantanée EPi produite par les cellules photovoltaïques.

Dans le mode de réalisation décrit ici, la durée de vie DVSA restante sans apport en énergie est obtenue, comme représenté à la figure 5, par lecture d'un abaque indexé par la quantité d'énergie emmagasinée ES et par la quantité d'énergie instantanée consommée ECi.

Ainsi, dans l'exemple de la figure 5, il peut être estimé, si la quantité d'énergie emmagasinée ES de la batterie 101 est 3.1 Wh et si la quantité d'énergie instantanée ECi consommée par l'objet connecté 100 est de 4 Wh, que la durée de vie restante DVSA de l'objet connecté sans apport en énergie est de 125 secondes.

Dans un mode de réalisation, on obtient, au cours d'une étape E70, la durée de vie DV restante de l'objet connecté 100 à partir de la durée de vie, DVSA, restante de l'objet connecté 100 sans apport en énergie, et de la quantité d'énergie instantanée pouvant être produite EPi.

Dans le mode de réalisation décrit ici, la durée de vie DVrestante est obtenue à partir de l'abaque de la figure 5 déjà décrit, en tenant compte de la quantité d'énergie instantanée EPi produite.

Cette opération peut être effectuée en considérant que la quantité d'énergie instantanée produite EPi vient en déduction de la quantité d'énergie instantanée consommée ECi, pour définir une quantité d'énergie instantanée consommée corrigée, notée ECi'.

Ainsi, par exemple, sur l'abaque de la figure 5, pour une quantité d'énergie emmagasinée ES de la batterie 101 égale à 3.1 Wh, une quantité d'énergie instantanée consommée ECi par l'objet connecté 100 égale à 4.5 Wh, et une quantité d'énergie instantanée EPi produite égale à 2.5 Wh, on peut estimer que la durée de vie DV restante de l'objet connecté est de 145 secondes, puisque la quantité d'énergie instantanée consommée corrigée ECi' est égale à 2 Wh.

Toujours à la figure 2, le procédé comporte une étape E80 d'obtention de la durée de fonctionnement prévue, DF, de l'objet connecté 100.

Dans le mode de réalisation décrit ici, la durée de fonctionnement prévue DF de l'objet connecté 100 est la durée de vie restante DV de l'objet connecté obtenue à l'étape E70.

Dans un autre mode de réalisation, la durée de fonctionnement prévue DF de l'objet connecté 100 est estimée, comme représentée figure 6, en fonction de la structure de données 146, celle-ci ayant été mise à jour au cours d'occurrences précédentes de l'étape E80.

Par exemple, en supposant, en référence à la figure 6, que l'instant courant IC est 12h25, il peut être estimé par simple interpolation à partir de la structure de données 146, que la durée de fonctionnement de l'objet connecté à 12h25 est de 7 minutes puisqu'il ressort de cette structure que la durée de vie prévue diminue de 2 minutes toutes les 5 minutes.

Une telle estimation peut par exemple se faire à l'aide de calculs mathématiques ou avec l'aide d'un modèle d'intelligence artificielle.

Les étapes E60 à E84 exposées ci-dessus ont permis de décrire différents modes de réalisation du procédé, permettant d'obtenir une durée de fonctionnement prévue DF de l'objet connecté 100.

Cette durée de fonctionnement prévue DF permet ainsi de prévoir un instant de défaillance de l'objet connecté, et elle est prise en compte pour mettre en oeuvre une action.

De retour à la figure 2, après l'étape E80 d'obtention de la durée de fonctionnement prévue DF de l'objet connecté, le procédé selon l'invention comporte un test E90 pour déterminer si au moins une action doit être mise en oeuvre en fonction de la durée de fonctionnement prévue DF de l'objet connecté.

Par exemple, et de façon non limitative, une action est mise en oeuvre si la durée de fonctionnement prévue DF :

- est inférieure à un seuil défini ; ou
- ne permet pas à l'objet connecté d'effectuer une tâche programmée ; ou
- ne permet pas à l'objet connecté de terminer une tâche en cours, sans adaptation de cette tâche.

Si le résultat du test E90 est positif, une action est mise en oeuvre à l'étape E100. Selon le mode de réalisation choisi, l'action mise en oeuvre par l'objet connecté peut comporter :

- la modification d'un mode de consommation d'énergie de l'objet connecté 100. L'objet connecté 100 peut par exemple être mis en veille ou éteint; et/ou,
- la sauvegarde des données comprises dans la mémoire volatile 108 de l'objet connecté, dans sa mémoire non volatile 106; et/ou,
- la restitution ou l'envoi d'une alerte indiquant la durée de fonctionnement DF de l'objet connecté 100 ; et/ou,
- la reprogrammation d'une tâche programmée à un instant où il est prévu que l'objet connecté sera en défaillance, par exemple une tâche de calcul, tel qu'un calcul cryptographique; et/ou,
- l'adaptation d'au moins un paramètre d'une communication (établie ou à venir) entre l'objet connecté et au moins un autre équipement, par exemple une adaptation d'un débit de communication.

La figure 7 représente, dans un mode de réalisation particulier, l'architecture fonctionnelle de l'objet connecté 100 de la figure 1. Selon cette architecture, l'objet connecté comporte :

- un module M10 de mesure d'une quantité d'énergie emmagasinée ES dans la batterie 101;

- un module M20 d'obtention d'une quantité d'énergie instantanée consommée ECi par l'objet connecté ;

- un module M30 d'obtention d'une quantité d'énergie instantanée dépendante de l'énergie ambiante et pouvant être utilisée pour alimenter l'objet connecté. Ce module M30 peut comprendre un capteur 113 apte à mesurer l'énergie ambiante EA et/ou une unité 124 apte à mesurer à la borne 123 une quantité d'énergie produite par les panneaux photovoltaïques 103 ;

- un module M60 d'obtention d'une durée de vie restante prévue de la batterie 101 ;

- un module M80 d'obtention d'une durée de fonctionnement DF de l'objet connecté ; et

- un module M100 de mise en oeuvre d'au moins une action prenant en compte la durée de fonctionnement DF.

Ces modules peuvent s'appuyer sur des structures de données telles que celles décrites plus haut en référence aux figures 3, 4 et 6 (126, 136, 146).

**Revendications**

1. Procédé de prévision d'une durée de fonctionnement (DF) d'un objet connecté (100) comportant une batterie (101), le procédé comprenant :

    - une étape (E10) d'obtention d'une quantité d'énergie emmagasinée (ES) dans la batterie (101) ;
    - une étape (E20) d'obtention d'une quantité d'énergie instantanée consommée (ECi) par l'objet connecté (100) ;
    - une étape (E40) d'obtention d'au moins une quantité d'énergie instantanée (EA, EPi) dépendante d'une énergie ambiante (EA) issue d'une source d'énergie renouvelable, et pouvant être utilisée pour alimenter ledit objet connecté (100);
    - une étape (E70) d'obtention d'une durée de vie restante (DV) de l'objet connecté (100) en fonction desdites quantités (ES, Epi, Eci) ;
    - une étape (E80) d'obtention de ladite durée de fonctionnement (DF) prévue de l'objet connecté (100) en fonction de ladite durée de vie restante (DV) ; et
    - une étape (E100) de mise en oeuvre d'au moins une action prenant en compte (E90) ladite durée de fonctionnement prévue (DF).

2. Procédé selon la revendication 1 comportant une étape (E21) de mesure de ladite quantité d'énergie instantanée consommée (Eci).

3. Procédé selon la revendication 1 ou 2, dans lequel ladite quantité d'énergie instantanée consommée (Eci) est obtenue à partir de mesures (E10) successives d'une quantité d'énergie emmagasinée (ES) dans ladite batterie (101).

4. Procédé selon la revendication 3, dans lequel ladite durée de vie restante (DV) de l'objet connecté (100) est obtenue à partir d'une durée de vie restante en l'absence d'apport d'énergie (DVSA), ladite durée de vie restante en l'absence d'apport d'énergie (DVSA) étant obtenue (E60) dans un abaque (EDS) indexé par lesdites quantités d'énergie instantanée consommée et d'énergie emmagasinée (Eci, ES).

5. Procédé selon l'une quelconque des revendications 1 à 4 dans lequel ladite quantité d'énergie instantanée (Epi) pouvant être utilisée pour alimenter ledit objet connecté (100) est mesurée (E41) en sortie d'un module de production d'énergie dudit objet connecté (100).

6. Procédé selon la revendication 4 ou 5 comportant :

    - une étape (E42) de mesure de ladite énergie ambiante (EA) issue d'une source d'énergie renouvelable ;
    - la durée de vie (DV) de l'objet connecté étant déterminée à partir de ladite mesure de l'énergie ambiante (EA) issue d'une source d'énergie renouvelable et de ladite quantité d'énergie instantanée consommée (Eci) par l'objet connecté (100).

7. Procédé selon l'une quelconque des revendications 1 à 5 comportant :

    - une étape (E82) d'enregistrement de ladite durée de fonctionnement prévue (DF) et d'un instant courant (IC) dans un historique (146) ; et
    - une étape (E84) d'estimation de ladite durée de fonctionnement prévue (DF) à un instant donné (IF) en fonction dudit historique (146).

8. Procédé selon l'une quelconque des revendications 1 à 7 comportant :

    - une étape (E22) d'obtention, pour au moins tâche (Ti) susceptible d'être mise en oeuvre par ledit objet connecté (100) d'un profil de consommation instantanée dudit objet connecté en raison de la mise en oeuvre de ladite tâche (Ti) ;
    - une étape (E24) d'estimation de ladite quantité d'énergie instantanée consommée (Eci) à partir d'une structure de données (126) de profils de consommation de tâches (Ti) susceptibles d'être mises en oeuvre par ledit objet connecté (100).

9. Procédé selon la revendication 8 dans lequel ledit profil est créé ou mis à jour (E26) à partir des tâches (Ti) mises en oeuvre par ledit objet connecté (100) à un instant donné et de de ladite quantité d'énergie instantanée consommée (Eci) audit instant donné.

10. Procédé selon l'une quelconque des revendications 1 à 9 dans lequel ladite action (E100) comporte une adaptation d'au moins un paramètre d'une communication entre ledit objet connecté (100) et au moins un ou autre équipement en fonction de ladite durée de fonctionnement prévue (DF).

11. Procédé selon l'une quelconque des revendications 1 à 10 dans lequel ladite action (E100) comporte la restitution d'une alerte indiquant ladite durée de fonctionnement prévue (DF).

12. Procédé selon l'une quelconque des revendications 1 à 11 dans lequel ladite action (E100) comporte la modification d'un mode de consommation d'énergie dudit objet connecté (100).

13. Procédé selon l'une quelconque des revendications 1 à 12 dans lequel ladite action (E100) comporte la sauvegarde de données dudit objet connecté (100).

14. Objet connecté (100) comportant :

- une batterie (101) ;
- un module (M10) de mesure d'une quantité d'énergie emmagasinée (ES) dans la batterie (101) ;
- un module (M20) d'obtention d'une quantité d'énergie instantanée consommée (Eci) par l'objet connecté ;
- un module (M30) d'obtention d'au moins une quantité d'énergie instantanée (EA, Epi) dépendante d'une énergie ambiante (EA) issue d'une source d'énergie renouvelable et pouvant être utilisée pour alimenter ledit objet connecté (100) ;
- un module (M60) d'obtention d'une durée de vie restante (DV) dudit objet connecté (100) en fonction desdites quantités (ES, EPi, ECi) ;
- un module (M80) d'obtention d'une durée de fonctionnement prévue (DF) dudit objet connecté (100) en fonction de ladite durée de vie restante (DV); et
- un module (M100) de mise en oeuvre d'au moins une action prenant en compte (E90) ladite durée de fonctionnement prévue (DF).

15. Programme d'ordinateur (117) comportant des instructions configurées pour mettre en oeuvre, lorsqu'elles sont exécutées par un processeur (104), les étapes d'un procédé de prévision selon l'une quelconque des revendications 1 à 13.

**Patentansprüche**

1. Verfahren zur Vorhersage einer Betriebsdauer (DF) eines vernetzten Objekts (100), das eine Batterie (101) enthält, wobei das Verfahren umfasst:

- einen Schritt (E10) des Erhaltens einer in der Batterie (101) gespeicherten Energiemenge (ES);
- einen Schritt (E20) des Erhaltens einer von dem vernetzten Objekt (100) verbrauchten momentanen Energiemenge (ECi);
- einen Schritt (E40) des Erhaltens mindestens einer momentanen Energiemenge (EA, EPi), die von einer Umgebungsenergie (EA) abhängig ist, die aus einer erneuerbaren Energiequelle stammt und dazu genutzt werden kann, das vernetzte Objekt (100) zu versorgen;
- einen Schritt (E70) des Erhaltens einer Restlebensdauer (DV) des vernetzten Objekts (100) in Abhängigkeit von den Mengen (ES, Epi, Eci);
- einen Schritt (E80) des Erhaltens der vorhergesagten Betriebsdauer (DF) des vernetzten Objekts (100) in Abhängigkeit von der Restlebensdauer (DV); und
- einen Schritt (E100) des Ausführens mindestens einer Aktion unter Berücksichtigung (E90) der vorhergesagten Betriebsdauer (DF).

2. Verfahren nach Anspruch 1, das einen Schritt (E21) des Messens der verbrauchten momentanen Energiemenge (Eci) umfasst.

3. Verfahren nach Anspruch 1 oder 2, bei dem die verbrauchte momentane Energiemenge (Eci) anhand von aufeinander folgenden Messungen (E10) einer in der Batterie (101) gespeicherten Energiemenge (ES) erhalten wird.

4. Verfahren nach Anspruch 3, bei dem die Restlebensdauer (DV) des vernetzten Objekts (100) anhand einer Restlebensdauer ohne Energiezufuhr (DVSA) erhalten wird, wobei die Restlebensdauer ohne Energiezufuhr (DVSA) in einem durch die verbrauchte momentane Energiemenge und die gespeicherte Energiemenge (Eci, ES) indexierten Diagramm (EDS) erhalten wird (E60).

5. Verfahren nach einem der Ansprüche 1 bis 4, bei dem die momentane Energiemenge (Epi), die genutzt werden kann, um das vernetzte Objekt (100) zu versorgen, im Ausgang eines Energieerzeugungsmoduls des vernetzten Objekts (100) gemessen wird (E41).

6. Verfahren nach Anspruch 4 oder 5, umfassend:

- einen Schritt (E42) des Messens der Umgebungsenergie (EA), die aus einer erneuerbaren Energiequelle stammt;
- wobei die Lebensdauer (DV) des vernetzten Objekts anhand der Messung der Umgebungsenergie (EA), die aus einer erneuerbaren Energiequelle stammt, und der von dem vernetzten Objekt (100) verbrauchten momentanen Energiemenge (Eci) ermittelt wird.

7. Verfahren nach einem der Ansprüche 1 bis 5, umfassend:

- einen Schritt (E82) des Speicherns der vorhergesagten Betriebsdauer (DF) und eines aktuellen Zeitpunkts (IC) in einer Historie (146); und
- einen Schritt (E84) des Schätzens der vorhergesagten Betriebsdauer (DF) zu einem gegebenen Zeitpunkt (IF) in Abhängigkeit von der Historie (146).

8. Verfahren nach einem der Ansprüche 1 bis 7, umfassend:

- einen Schritt (E22) des Erhaltens, für mindestens Aufgabe (Ti), die geeignet ist, von dem vernetzten Objekt (100) ausgeführt zu werden, eines Profils des momentanen Verbrauchs des vernetzten Objekts aufgrund des Ausführens der Aufgabe (Ti);
- einen Schritt (E24) des Schätzens der verbrauchten momentanen Energiemenge (Eci) anhand einer Datenstruktur (126) aus Verbrauchsprofilen von Aufgaben (Ti), die geeignet sind, von dem vernetzten Objekt (100) ausgeführt zu werden.

9. Verfahren nach Anspruch 8, bei dem das Profil anhand von Aufgaben (Ti), die von dem vernetzten Objekt (100) zu einem gegebenen Zeitpunkt ausgeführt werden, und der verbrauchten momentanen Energiemenge (Eci) zu dem gegebenen Zeitpunkt erstellt oder aktualisiert wird (E26) .

10. Verfahren nach einem der Ansprüche 1 bis 9, bei dem die Aktion (E100) eine Anpassung mindestens eines Parameters einer Kommunikation zwischen dem vernetzten Objekt (100) und mindestens einer oder anderen Einrichtung in Abhängigkeit von der vorhergesagten Betriebsdauer (DF) umfasst.

11. Verfahren nach einem der Ansprüche 1 bis 10, bei dem die Aktion (E100) das Ausgeben einer Warnung umfasst, die die vorhergesagte Betriebsdauer (DF) angibt.

12. Verfahren nach einem der Ansprüche 1 bis 11, bei dem die Aktion (E100) das Ändern eines Energieverbrauchsmodus des vernetzten Objekts (100) umfasst.

13. Verfahren nach einem der Ansprüche 1 bis 12, bei dem die Aktion (E100) das Sichern von Daten des vernetzten Objekts (100) umfasst.

14. Vernetztes Objekt (100), umfassend:

- eine Batterie (101);
- ein Modul (M10) zum Messen einer in der Batterie (101) gespeicherten Energiemenge (ES);
- ein Modul (M20) zum Erhalten einer von dem vernetzten Objekt verbrauchten momentanen Energiemenge (Eci);
- ein Modul (M30) zum Erhalten mindestens einer momentanen Energiemenge (EA, Epi), die von einer Umgebungsenergie (EA) abhängig ist, die aus einer erneuerbaren Energiequelle stammt und dazu genutzt werden kann, das vernetzte Objekt (100) zu versorgen;
- ein Modul (M60) zum Erhalten einer Restlebensdauer (DV) des vernetzten Objekts (100) in Abhängigkeit von den Mengen (ES, EPi, ECi);

- ein Modul (M80) zum Erhalten einer vorhergesagten Betriebsdauer (DF) des vernetzten Objekts (100) in Abhängigkeit von der Restlebensdauer (DV); und
- ein Modul (M100) zum Ausführen mindestens einer Aktion unter Berücksichtigung (E90) der vorhergesagten Betriebsdauer (DF).

15. Computerprogramm (117), das Anweisungen umfasst, die dazu ausgestaltet sind, bei ihrer Ausführung durch einen Prozessor (104) die Schritte eines Verfahrens zur Vorhersage nach einem der Ansprüche 1 bis 13 auszuführen.

**Claims**

1. Method for predicting an operating time (DF) of a connected object (100) comprising a battery (101), the method comprising:

   - a step (E10) of obtaining an amount of energy (ES) stored in the battery (101);
   - a step (E20) of obtaining an amount of instantaneous energy (ECi) consumed by the connected object (100);
   - a step (E40) of obtaining at least one amount of instantaneous energy (EA, EPi) dependent on an ambient energy (EA) originating from a renewable energy source, and able to be used to supply said connected object (100) ;
   - a step (E70) of obtaining a remaining service life (DV) of the connected object (100) on the basis of said amounts (ES, Epi, Eci);
   - a step (E80) of obtaining said predicted operating time (DF) of the connected object (100) on the basis of said remaining service life (DV); and
   - a step (E100) of performing at least one action taking into account (E90) said predicted operating time (DF) .

2. Method according to Claim 1, comprising a step (E21) of measuring said amount of consumed instantaneous energy (Eci).

3. Method according to Claim 1 or 2, wherein said amount of consumed instantaneous energy (Eci) is obtained from successive measurements (E10) of an amount of energy (ES) stored in said battery (101).

4. Method according to Claim 3, wherein said remaining service life (DV) of the connected object (100) is obtained from a remaining service life in the absence of provision of energy (DVSA), said remaining service life in the absence of provision of energy (DVSA) being obtained (E60) from an abacus (EDS) indexed by said amounts of consumed instantaneous energy and stored energy (Eci, ES).

5. Method according to any one of Claims 1 to 4, wherein said amount of instantaneous energy (Epi) able to be used to supply said connected object (100) is measured (E41) at the output of an energy production module of said connected object (100).

6. Method according to Claim 4 or 5, comprising:

   - a step (E42) of measuring said ambient energy (EA) originating from a renewable energy source;
   - the service life (DV) of the connected object being determined based on said measurement of the ambient energy (EA) originating from a renewable energy source and from said amount of instantaneous energy (Eci) consumed by the connected object (100).

7. Method according to any one of Claims 1 to 5, comprising:

   - a step (E82) of recording said predicted operating time (DF) and a current time (IC) in a history (146); and
   - a step (E84) of estimating said predicted operating time (DF) at a given time (IF) on the basis of said history (146).

8. Method according to any one of Claims 1 to 7, comprising:

   - a step (E22) of obtaining, for at least task (Ti) likely to be performed by said connected object (100), a profile of the instantaneous consumption of said connected object caused by performing said task (Ti);
   - a step (E24) of estimating said amount of consumed instantaneous energy (Eci) based on a data structure (126) of consumption profiles of tasks (Ti) likely to be performed by said connected object (100).

9. Method according to Claim 8, wherein said profile is created or updated (E26) based on the tasks (Ti) performed by said connected object (100) at a given time and on said amount of instantaneous energy (Eci) consumed at said given time.

10. Method according to any one of Claims 1 to 9, wherein said action (E100) comprises adapting at least one parameter of a communication between said connected object (100) and at least one or other equipment on the basis of said predicted operating time (DF).

11. Method according to any one of Claims 1 to 10, wherein said action (E100) comprises outputting an alert indicating said predicted operating time (DF).

12. Method according to any one of Claims 1 to 11, wherein said action (E100) comprises modifying an energy consumption mode of said connected object (100).

13. Method according to any one of Claims 1 to 12, wherein said action (E100) comprises saving data of said connected object (100).

14. Connected object (100) comprising:

   - a battery (101);
   - a module (M10) for measuring an amount of energy (ES) stored in the battery (101);
   - a module (M20) for obtaining an amount of instantaneous energy (Eci) consumed by the connected object;
   - a module (M30) for obtaining at least one amount of instantaneous energy (EA, Epi) dependent on an ambient energy (EA) originating from a renewable energy source and able to be used to supply said connected object (100) ;
   - a module (M60) for obtaining a remaining service life (DV) of said connected object (100) on the basis of said amounts (ES, EPi, ECi);
   - a module (M80) for obtaining a predicted operating time (DF) of said connected object (100) on the basis of said remaining service life (DV); and
   - a module (M100) for performing at least one action taking into account (E90) said predicted operating time (DF) .

15. Computer program (117) containing instructions configured so as to perform the steps of a prediction method according to any one of Claims 1 to 13 when they are executed by a processor (104).

EP 3 902 095 B1

Figure 1

Figure 2

12

Figure 3

Figure 4

Figure 5

146

| IC | 12h05 | 12h10 | 12h15 | 12h20 |
|---|---|---|---|---|
| DF(min) | 15 | 13 | 11 | 9 |

Figure 6

100

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011151943 A